# DEMANDE DE BREVET EUROPEEN

(11) **EP 0 936 104 A1**
(43) Date de publication de la demande: **18.08.1999**
(21) Numéro de dépôt: 99400385.3
(22) Date de dépôt: 17.02.1999
(51) Int. Cl.: B60N 2/28

(54) **Agencement de moyens d'accrochage d'un siège enfant**

(30) Priorité: 17.02.1998 FR 9801921
(71) Demandeur: RENAULT, 92109 Boulogne-Billancourt (FR)
(72) Inventeur: Girard, Philippe, 95240 Cormeilles en Parisis (FR); Golinelli, Mathieu, 78960 Voisins Le Bretonneux (FR)

(57) **Abrégé**

Agencement de moyens d'accrochage (3) d'un siège enfant, constitués par des axes d'accrochage (3) de dispositifs de verrouillage portés par ledit siège enfant, caractérisé en ce que les moyens d'accrochage (3) sont regroupés sur une traverse (1) amovible.

## Description

L'invention concerne un agencement de moyens d'accrochage d'un siège enfant, et plus particulièrement d'un siège enfant installé sur un siège pour adulte dans un véhicule automobile.

Afin de fixer un siège enfant sur un siège adulte de véhicule automobile, il est généralement utilisé une ceinture de sécurité de retenue des passagers, telle que décrite dans la publication FR-A-2 735 001. Cette ceinture de sécurité étant en liaison avec des moyens d'accrochages prévus dans le siège enfant.

La bonne retenue du siège enfant lors d'une collision du véhicule automobile contre un obstacle est dépendante d'une bonne installation de la ceinture de sécurité dans les moyens d'accrochages dudit siège enfant. Une mauvaise installation de la sangle pouvant avoir des conséquences sur la vie de l'enfant installé dans le siège, ainsi que pour les passagers avant. En effet, une mauvaise fixation du siège peut provoquer la projection, dans l'habitacle, dudit siège enfant et de son occupant, lors de la collision.

Afin d'améliorer les conditions de fixation des sièges enfant il a été défini un projet de norme ISO appelé "NORME ISOFIX"(ISO WG 13216) permettant une standardisation des accrochages de sièges enfant. Ce projet de norme spécifie en particulier les dimensions d'un axe transversal, localisé à la jonction du dossier et de l'assise du siège adulte, recevant des dispositifs de verrouillage portés par les sièges enfant. Ce type de fixation assurant une simplicité et une sécurité de fixation.

La publication EP-A- 0 619 202 décrit un exemple de siège enfant muni d'un dispositif de verrouillage compatible avec la "NORME ISOFIX".

L'axe d'accrochage est généralement prévu sous la forme d'une tige pliée en forme de U, liée rigidement à la structure du siège ou au plancher du véhicule automobile.

L'axe d'accrochage est généralement prévu sous la forme d'une tige pliée en forme de U, liée rigidement à la structure du siège ou au plancher du véhicule automobile.

La liaison de l'axe d'accrochage sur la structure du siège nécessite un renforcement important de ladite structure de siège, ce qui engendre des coûts et un poids accru dudit siège.

La liaison par soudage sur le plancher du véhicule automobile nécessite un renforcement local dudit plancher, afin de résister aux efforts de traction lors d'une collision du véhicule contre un obstacle. De plus le soudage de pièces supplémentaires entraîne une augmentation du temps de cycle de la fabrication du plancher du véhicule automobile, ainsi qu'une augmentation du coût de fabrication dudit plancher.

Chaque véhicule fabriqué sur la chaîne d'assemblage pouvant avoir un pays de destination spécifique, il est important de pouvoir intégrer les différences engendrées par ces pays sans en augmenter le coût de fabrication ni le nombre de pièces. Le renforcement du plancher, afin de recevoir l'axe d'accrochage, ne permet pas de prévoir des fabrications dudit plancher en fonction des normes, de retenue des sièges enfant, en vigueur dans le pays de destination du véhicule fabriqué sans pour autant provoquer une évolution négative de la gestion de la fabrication et du nombre de pièces assemblées.

De plus lors d'un changement éventuel de législation il est important de pouvoir s'adapter rapidement au moindre coût.

Afin de pallier ces inconvénients, l'invention a pour objet une traverse qui comporte des U d'accrochage de siège enfant.

L'invention a également pour objet, une traverse amovible fixée au plancher par l'intermédiaire d'une liaison démontable, reprenant des fixations existantes dans le véhicule quelles que soient les normes de sécurité en vigueur dans le pays de destination du véhicule fabriqué, et sans augmenter le nombre de pièces assemblées sur le plancher.

Selon une caractéristique de l'invention, les moyens d'accrochage sont regroupés sur une traverse amovible.

Selon une autre caractéristique de l'invention, la liaison avec le plancher est effectuée par l'intermédiaire de fixation démontable.

Selon une autre caractéristique de l'invention, les fixations démontable reçoivent des anneaux d'arrimage.

Selon une autre caractéristique de l'invention, les moyens d'accrochage sont localisés sur la traverse en correspondance avec des zones d'assise de siège destiné à des adultes.

Selon une autre caractéristique de l'invention, la traverse comporte des éléments de rigidification conformés en retenue de charges.

Agencement de moyens d'accrochage selon la revendication , caractérisé en ce que des moyens d'absorption de l'énergie cinétique, générée par la collision du véhicule automobile contre un obstacle, sont réalisés entre les axes d'accrochage et le plancher du véhicule automobile.

D'autres caractéristiques et avantages de l'invention apparaîtront à la lecture de la description d'exemples de réalisation d'un support de fixations au dessin annexé dans lequel:
- La figure 1 représente une vue en élévation latérale du support de fixation selon l'invention localisé derrière un siège.
- La figure 2 représente une vue perspective du support selon l'invention.

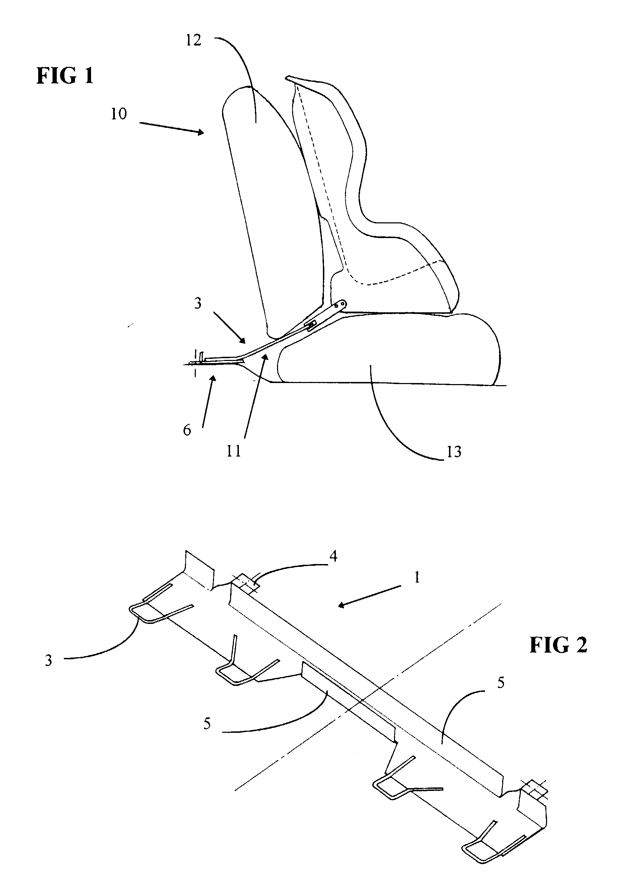

Tel que représenté à la figure 2, la traverse 1 est constituée d'une plaque 2 qui s'étend transversalement derrière les sièges arrière 10. Cette traverse peut être réalisée en tôle métallique ou en tout autre matériaux compatibles avec les contraintes appliquées sur ladite traverse 1 lors d'une collision du véhicule automobile contre un obstacle.

Des moyens d'accrochage 3, constitués par des axes d'accrochage, conformés en U, localisés en correspondance avec les places assises des sièges adulte 10 et plus particulièrement avec les places latérales, sont liés rigidement à la traverse 1. Tel que représenté à la figure 1, les axes d'accrochage 3 sont localisés dans un interstice 11 réalisé par la jonction du dossier 11 et de l'assise 13 du siège adulte 10. Par le terme adulte il faut comprendre les passagers pouvant s'installer dans le siège sans utiliser un réhausseur ou un dispositif complémentaire, lié à une obligation réglementaire correspondant à une mesure d'âge ou de taille. Ces mesures sont liées, en générale à un bon positionnement de la ceinture de sécurité sur le passager.

La traverse 1 comporte au moins deux pattes 4 de fixation, permettant une liaison avec le plancher 6. La liaison est réalisée par l'intermédiaire d'une fixation d'anneaux d'arrimage (non représenté), par exemple, ou de tout autre éléments prévus sur tout les planchers 6 du véhicule quelle que soit sa destination. La traverse 1 peut être rendue facilement amovible par un utilisateur du véhicule.

La traverse 1 comporte des éléments de rigidification 5, réalisés par l'intermédiaire de bords relevés, tels que représentés à la figure 2, ou par des emboutis. Les éléments de rigidification 5 peuvent être conformés de manière à pouvoir réaliser un moyen de retenue de charges, localisés dans le compartiment à bagages, en créant un obstacle au déplacement desdites charges.

En fonction du pays de destination du véhicule fabriqué, la traverse 1 est positionnée sur les fixations d'anneaux d'arrimage au moment de l'installation de ces derniers sur la chaîne d'assemblage du véhicule. La traverse 1 étant assemblée en temps masqué et stockée à proximité de la chaîne d'assemblage du véhicule.

Une telle installation permet de façon peu coûteuse d'adapter le véhicule fabriqué aux normes de retenue des sièges enfant, en vigueur dans le pays de destination.

De plus, de part sa conception, la traverse 1 peut devenir un élément standard compatible avec différent véhicule du fabricant.

Afin d'améliorer l'absorption de l'énergie cinétique au cours d'une collision, les U ou les liaisons de la traverse 1 avec le plancher 6, peuvent avantageusement comporter des moyens déformables ou déchirables, lors d'un certain niveau de choc. Ces moyens, par leur déformation programmée, absorbant une partie de l'énergie cinétique appliquée au siège enfant et à son occupant ou, lorsque la traverse 1 est conformée en retenue de charges, l'énergie cinétique du chargement.

## Revendications

1. Agencement de moyens d'accrochage (3) d'un siège enfant, constitués par des axes d'accrochage (3) de dispositifs de verrouillage portés par ledit siège enfant, caractérisé en ce que les moyens d'accrochage (3) sont regroupés sur une traverse (1) amovible.

2. Agencement de moyens d'accrochage selon la revendication 1, caractérisé en ce que la liaison avec le plancher (6) est effectuée par l'intermédiaire de fixation démontable.

3. Agencement de moyens d'accrochage selon la revendication 2, caractérisé en ce que les fixations démontable reçoivent des anneaux d'arrimage.

4. Agencement de moyens d'accrochage selon l'une quelconque des revendications 1 à 3, caractérisé en ce que les moyens d'accrochage (3) sont localisés sur la traverse (1) en correspondance avec des zones d'assise du siège (10) destiné à des adultes.

5. Agencement de moyens d'accrochage selon l'une quelconque des revendications 1 à 4 , caractérisé en ce que la traverse (1) comporte des éléments de rigidification (5) conformés en retenue de charges.

6. Agencement de moyens d'accrochage selon l'une quelconque des revendications 1 à 4, caractérisé en ce que des moyens d'absorption de l'énergie cinétique, générée par la collision du véhicule automobile contre un obstacle, sont réalisés entre les moyens d'accrochage (3) et le plancher (6) du véhicule automobile.
